# EUROPÄISCHE PATENTSCHRIFT

(11) **EP 2 989 890 B1**
(45) Veröffentlichungstag und Bekanntmachung des Hinweises auf die Patenterteilung: **31.03.2021**
(21) Anmeldenummer: 15002341.4
(22) Anmeldetag: 06.08.2015
(51) Int. Cl.: A01K 5/02

(54) **VORRICHTUNG ZUM AUTOMATISCHEN FÜTTERN VON GRUPPEN VON TIEREN**
DEVICE FOR AUTOMATICALLY FEEDING GROUPS OF ANIMALS
DISTRIBUTEUR AUTOMATIQUE D'ALIMENTATION DE GROUPES D'ANIMAUX

(30) Priorität: 28.08.2014 DE 202014006887 U
(43) Veröffentlichungstag der Anmeldung: 02.03.2016
(73) Patentinhaber: Eder GmbH, 83104 Tuntenhausen (DE)
(72) Erfinder: Eder, Peter, 83104 Tuntenhausen (DE)

(56) Entgegenhaltungen:
- DE-A1- 2 440 598
- DE-U1- 8 508 004
- US-B1- 8 100 084

## Beschreibung

Die vorliegende Erfindung betrifft eine Vorrichtung (1) zum automatischen Füttern von Gruppen von Tieren, mit den in dem Oberbegriff des Patentanspruchs 1 angegebenen Merkmalen.

Unter dem Begriff "Gruppen von Tieren" sind Gruppen von Tieren gleicher Leistungsstufe zu verstehen, beispielsweise Gruppen von Trockenstehern, Mutterkühen oder Leistungstieren.

Aus dem Stand der Technik ist es bekannt, die Futtervorlage mittels an einem Traktor angebrachter Greifeinrichtung vorzunehmen, wobei für den Traktor in dem Stall ein oder mehrere Fahr-Schneisen vorgesehen sind.

Diese aus dem Stand der Technik bekannte Futtervorlage mittels einer an einem Traktor angebrachten Greifeinrichtung ist in vielerlei Hinsicht nachteilig:
Ein erster Nachteil der Futtervorlage mittels einer an einem Traktor angebrachten Greifeinrichtung besteht darin, dass für das Fahren des Traktors in dem Stall störende Fahr-Schneisen vorgesehen werden müssen, welche das meist ohnehin beschränkte Platzangebot für die Tiere in dem Stall erheblich verringern.

Ein weiterer Nachteil dieser bekannten Futtervorlage-Technik ist darin zu sehen, dass die in dem Stall vorhandenen Tiere gesundheitliche Belastungen durch von dem Traktor aufgewirbelten Staub, durch von dem Traktor erzeugten Lärm und durch von dem Traktor emittierte Abgase erfahren.

Schließlich ist diese bekannte Futtervorlage-Technik auch deswegen nachteilig, weil sie personalintensiv und zeitintensiv zu betreiben ist. Insbesondere ist dort die persönliche Anwesenheit eines Traktorfahrers und eines Futteran- und - wegschiebers erforderlich.

Aus der DE 85 08 004 U1 ist ein Futterzubringer mit einem Förderband bekannt, bei dem entweder der dortige, in dem Stallgebäude befindliche rotative Antrieb einer Seilaufwickelspule manuell ein- oder ausgeschaltet werden muss oder der außerhalb des Stallgebäudes vorgesehene Motor für eine Bandtrommel oder für eine Seilhaspel manuell aktiviert und deaktiviert werden muss, wobei im Falle dieses Motors - zusätzlich zu dem manuellen Ein- und Ausschalten - eine Kupplung zwischen dem Motor einerseits und der Bandtrommel oder der Seilhaspel andererseits, manuell vorgenommen werden muss.

Aufgabe der vorliegenden Erfindung ist daher die Bereitstellung einer Vorrichtung zum automatischen Füttern von Gruppen von Tieren, welche in dem Stall das Vorsehen einer Traktor-Schneise nicht mehr erfordert, über eine ausgesprochen geringe Raumforderung verfügt, die Tiergesundheit fördert, eine Belastung der Tiere in dem Stall durch Staub, Lärm und Abgase eines Traktors vermeidet, die den personellen und zeitlichen Arbeitsaufwand erheblich reduziert und dadurch zu einer ausgeprägten Verbesserung der Wirtschaftlichkeit führt.

Erfindungsgemäß wird diese Aufgabe bei einer gattungsgemäßen Vorrichtung durch die in dem Patentanspruch 1 angegebenen Merkmale gelöst. Besonders bevorzugte Ausführungsformen sind Gegenstand der Unteransprüche.

Ausführungsbeispiele der Erfindung werden anhand der Zeichnungen näher beschrieben. Es zeigen:

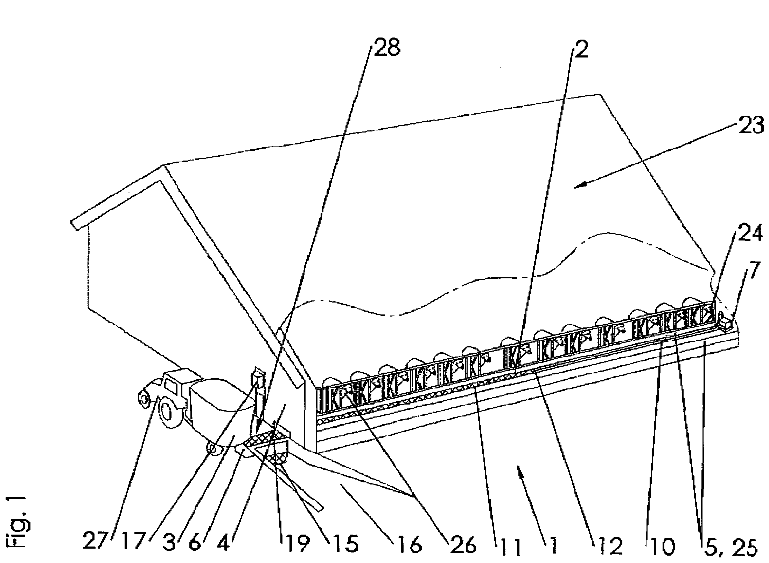

Figur 1 eine schematische, perspektivische Ansicht eines Stalles (23) von schräg links oben, wobei außerhalb dessen linker Stallmauer (4) ein Traktor (27) mit einem daran angehängten, fahrbaren Futterbehälter (3) vorgesehen ist und wobei sich ein Förder-Band (2) in das Innere des Stalles (23) - an der ersten Tierfütterungs-Stelle (26) vorbei in Richtung der letzten Tierfütterungs-Stelle (24) - durchgehend erstreckt;

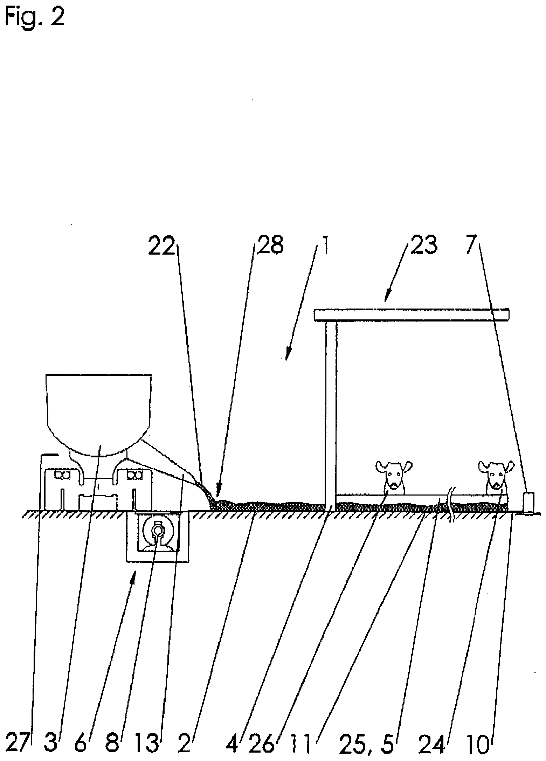

Figur 2 einen schematischen Schnitt durch eine erfindungsgemäße Vorrichtung (1), welcher außenseitig von dem Stall (23) einen verfahrbaren Futterbehälter (3) zeigt, dessen Auslass (13) außenseitig von dem Stall (23) auf den als Futterübergabestelle (28) ausgebildeten Anfangsbereich des Förder-Bandes (2) gerichtet ist und darauf einen Futter-Strahl (22) absetzt, wobei das mit Futter (11) beladene Förder-Band (2) in einem rinnenförmig ausgebildeten Futtertrog (5) geführt und unterstützt in das Stallinnere (23) bewegbar ist;

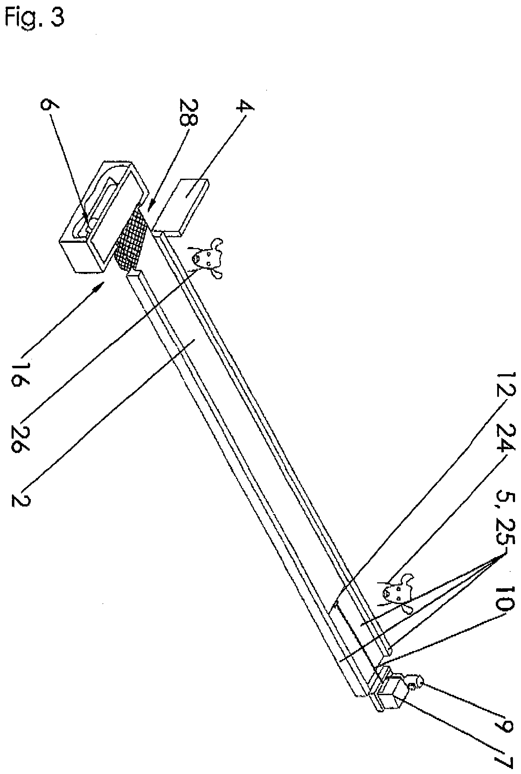

Figur 3 eine schematische, perspektivische Ansicht eines erfindungsgemäßen, in einem rinnenförmigen Futtertrog (5) zwischen einer ersten Tierfütterungs-Stelle (26) und einer letzten Tierfütterungs-Stelle (24) geführten Förder-Bandes (2), dessen freies Ende (12) mittels eines Seiles (10) mit einer Seilwinde (7) ausrollbar in Verbindung steht, während dessen anderes Ende mit einer gegebenenfalls außerhalb des Stalles (23) vorgesehenen Förder-Bandrolle (6) zurückrollbar in Verbindung steht;

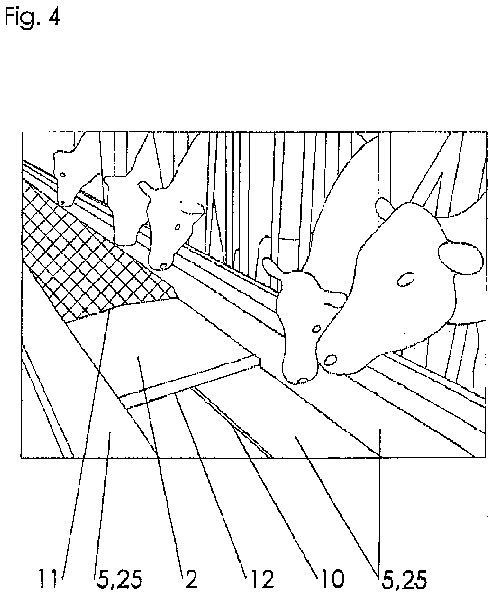

Figur 4 eine schematische, perspektivische Ansicht eines erfindungsgemäßen, in einem rinnenförmigen Futtertrog (5) geführten Futter-Bandes (2), welches über seine gesamte Breite hinweg mit Futter (11) beladen ist und zwischen der ersten Tierfütterungs-Stelle (26) und der letzten Tierfütterungs-Steile (24) in Richtung der Seilwinde (7) mittels des Seiles (10) bewegt wird;

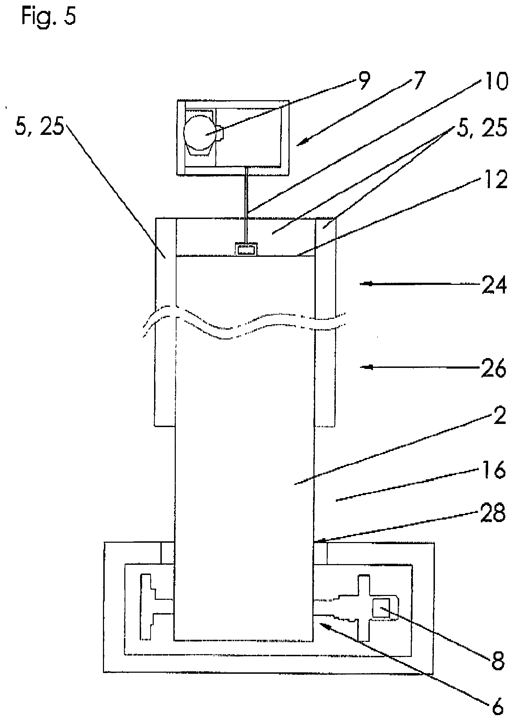

Figur 5 eine schematische Draufsicht auf ein erfindungsgemäßes Förder-Band (2), welches in einem rinnenförmigen Futtertrog (5) geführt ist, wobei das freie Ende (12) des Förder-Bandes (2) über ein Seil (10) mit der rotativ antreibbaren Seilwinde (7) ausrollbar in Verbindung steht und das gegenüberliegende Ende des Förder-Bandes (2) mit einer rotativ antreibbaren Förder-Bandrolle (6) ausziehbar in Verbindung steht;

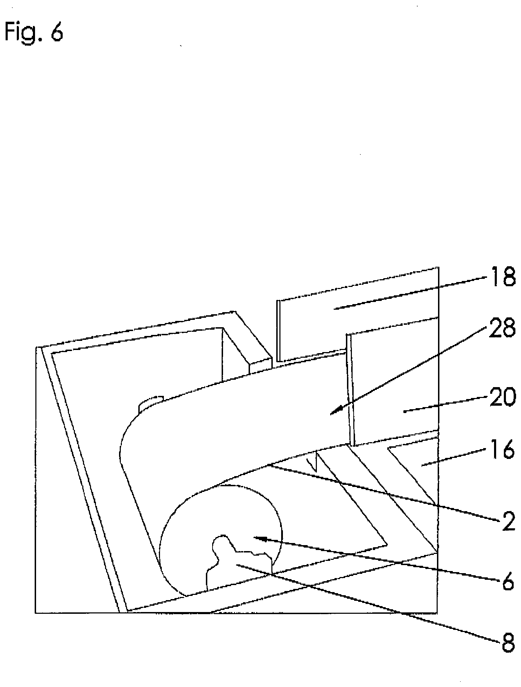

Figur 6 eine schematische, perspektivische Ansicht einer gegebenenfalls außerhalb eines Stalles (23) vorgesehenen, rotativ antreibbaren Förder-Bandrolle (6), wobei beidseitig von der Futterübergabestelle (28) einerseits eine durchgehende, seitliche Leitfläche (18) und hierzu gegenüberliegend andererseits eine seitliche Leitfläche (20) vorgesehen ist, wobei in diese Leitfläche (20) gegebenenfalls ein schwenkbares oder vertikal verstellbares Abstreifelement (14) integriert sein kann;

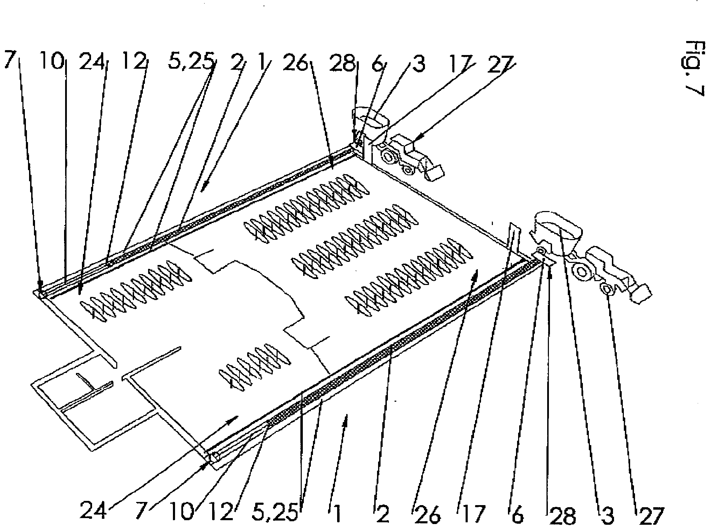

Figur 7 eine schematische, perspektivische Draufsicht auf die Grundfläche eines Stalles (23), wobei entlang der beiden seitlichen Außenwände des Stalles (23) und parallel hierzu zwei sich über die gesamte Länge des Stalles (23) erstreckende Förder-Bänder (2) in zweireihiger Anordnung vorgesehen sind und wobei für jedes Förder-Band (2) außerhalb des Stalles (23) eine mit einem Futterbehälter (3) in Verbindung stehende, individuelle Futterübergabestelle (28) ausgebildet ist, wobei jeder Futterbehälter (3) mit einem Anschluss für die Steuerungseinrichtung (17) verbunden ist;

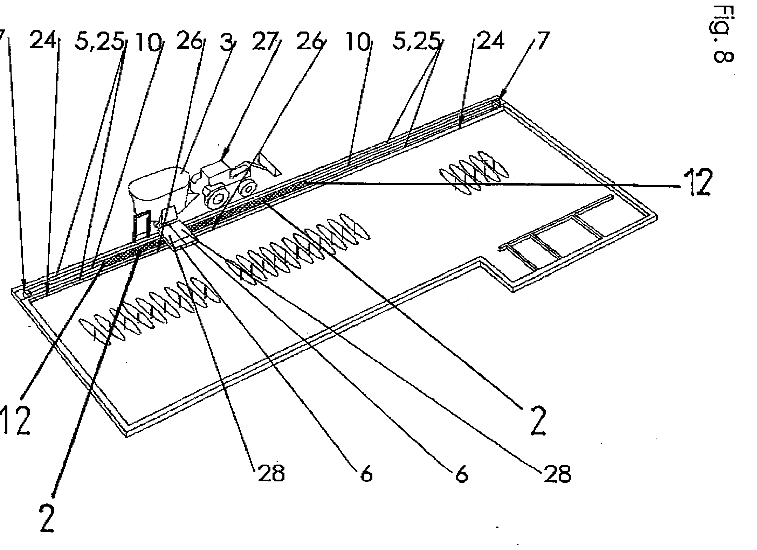

Figur 8 eine schematische, perspektivische Draufsicht auf die Grundfläche eines Stalles (23), wobei entlang einer seitlichen Außenwand des Stalles (23) und parallel hierzu zwei sich in ihrer Gesamtheit über die gesamte Länge des Stalles (23) erstreckende Förder-Bänder (2) vorgesehen sind und wobei für diese beiden Förder-Bänder (2) - in dem Bereich der Länge des Stalles (23) - eine zentrale, gemeinsame Futterübergangsstelle (28) vorgesehen ist und wobei diese Förder-Bänder (2) ausgehend von der gemeinsamen, zentralen Futterübergabestelle (28) in entgegengesetzten Richtungen von in dem Bereich der Futterübergabestellen (28) vorgesehenen Förder-Bandrollen (6) abrollbar sind;

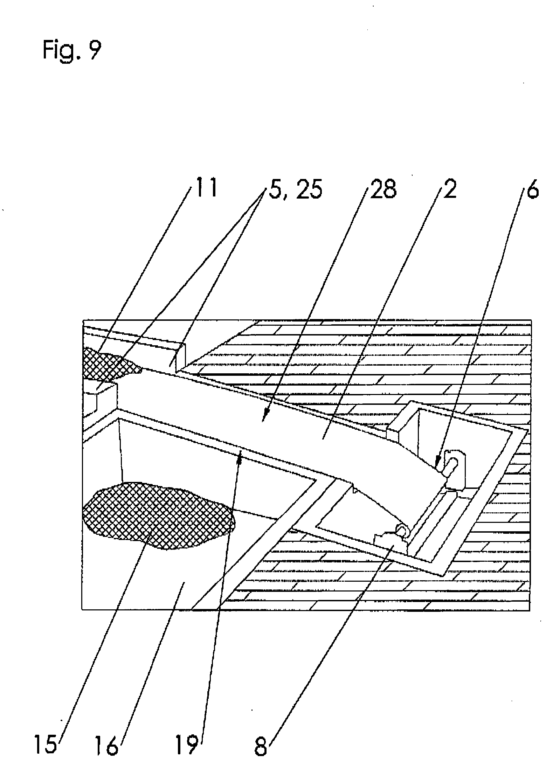

Figur 9 eine schematische, perspektivische Ansicht einer Futterübergabestelle (28), welche zur Bewältigung einer Höhendifferenz schräg nach oben ausgerichtet ist und welche keine seitlichen Leitflächen (18 und 20) trägt, wobei Restfutter (15) über die Abwurfstelle (19) in die Auffangstation (16) für abgestreiftes Restfutter (15) eingebracht wurde;

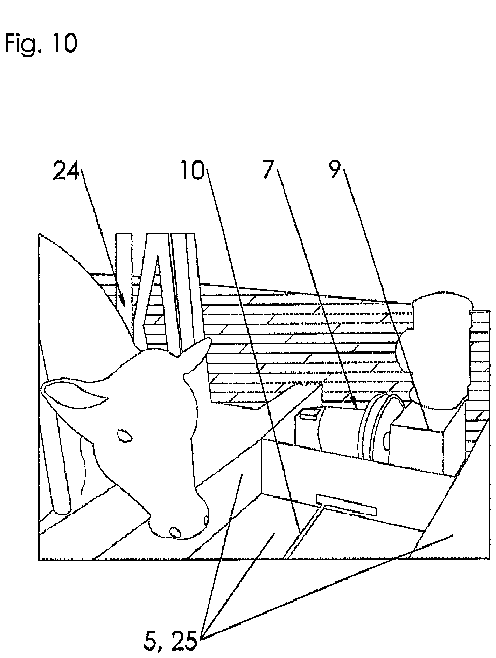

Figur 10 eine schematische, perspektivische Ansicht eines rinnenförmig ausgebildeten Futtertroges (5) für ein Förder-Band (2) in dem Bereich der letzten Tierfütterungs-Stelle (24), wobei sich an das freie Ende des Futtertroges (5) eine Seilwinde (7) anschließt, welche über ein Seil (10) das (hier nicht dargestellte) freie Ende (12) eines Förder-Bandes (2) in Richtung der Seilwinde (7) zieht;

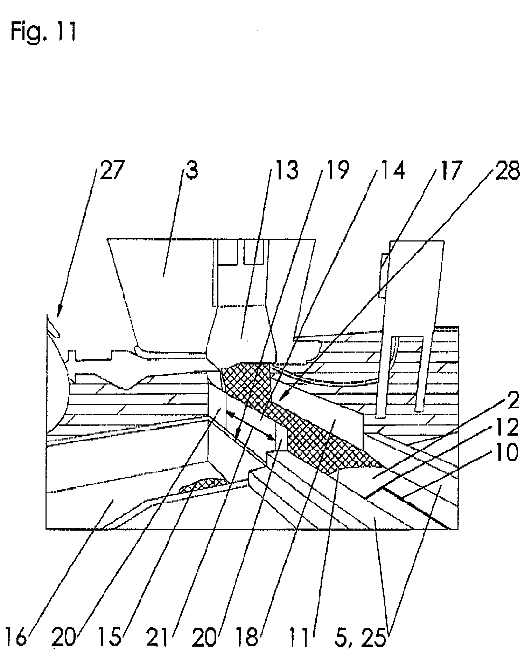

Figur 11 eine schematische, perspektivische Seitenansicht eines Futterbehälters (3) mit einem Auslass (13), welcher auf ein sich unterhalb des Auslasses (13) in Richtung der Seilwinde (7) bewegendes Förder-Band (2) gerichtet ist, wobei beidseitig von dieser Futterübergabestelle (28) jeweils durchgehende, einander gegenüberliegende seitliche Leitflächen (18 und 20) vorgesehen sind, wobei in einer der Leitflächen (20) ein gegebenenfalls schwenkbares Abstreifelement (14) integriert ist, wobei sich unterhalb des Abstreifelementes (14) eine Abwurfstelle (19) für Restfutter (15) erstreckt und darunter eine Auffangstation (16) für abgestreiftes Restfutter (15) vorgesehen ist und wobei das Förder-Band (2) nach der Passage der Futterübergabestelle (28) in einem rinnenförmigen Futtertrog (5) in Richtung einer Seilwinde (7) verläuft;

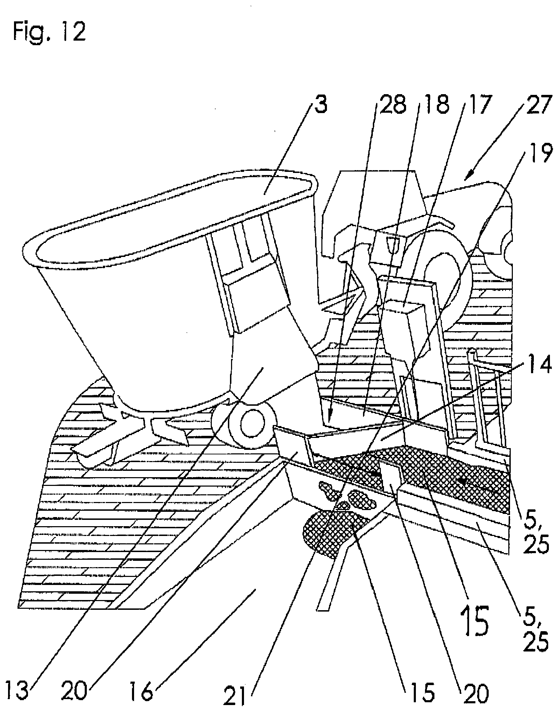

Figur 12 eine schematische, perspektivische Seitenansicht eines Futterbehälters (3) mit einem Auslass (13), welcher auf ein sich unterhalb des Auslasses (13) in Richtung der Seilwinde (7) bewegendes Förder-Band (2) gerichtet ist, wobei auf der einen Seite der Futterübergabestelle (28) eine durchgehende seitliche Leitfläche (18) vorgesehen ist, während auf der gegenüberliegenden Seite eine seitliche Leitfläche (20) vorgesehen ist, in welche ein seitwärts schwenkbares Abstreifelement (14) in schräg zur Längsachse des Förder-Bandes (2) ausgerichteter Stellung integriert ist, so dass während des Zurückfahrens des Förder-Bandes (2) in Richtung des Futterbehälters (3) von dem Abstreifelement (14) Restfutter (15) über die Abwurfstelle (19) zur Auffangstation (16) für Restfutter (15) geführt wird;

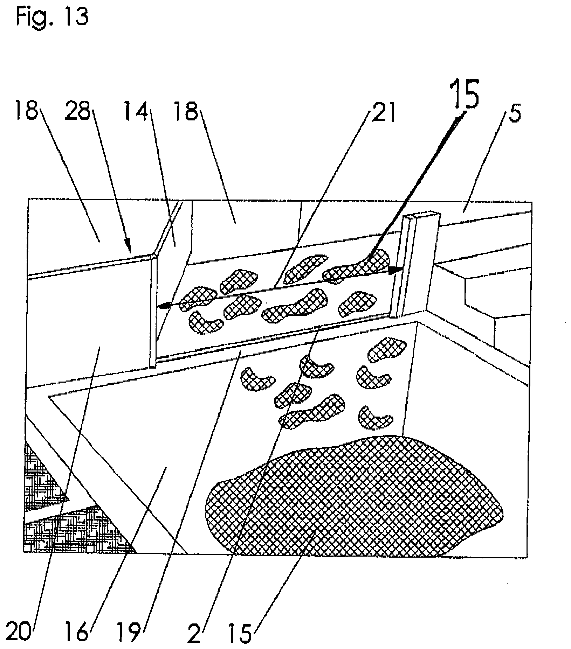

Figur 13 eine schematische, perspektivische Seitenansicht einer Futterübergabestelle (28), welche auf der einen Seite der Futterübergabestelle (28) eine durchgehende seitliche Leitfläche (18) aufweist, während auf der gegenüberliegenden Seite eine seitliche Leitfläche (20) vorgesehen ist, in welche ein schwenkbares Abstreifelement (14) in schräg zur Längsachse des Förder-Bandes (2) ausgerichteter Stellung integriert ist, so dass während des Zurückfahrens des Förder-Bandes (2) in Richtung des Futterbehälters (3) von dem Abstreifelement (14) Restfutter (15) über die Abwurfstelle (19) zur Auffangstation (16) für Restfutter (15) geführt wird;

Die Erfindung betrifft demnach eine Vorrichtung (1) zum automatischen Füttern von Gruppen von Tieren.

In der Regel kann sie eine oder mehrere Kombinationen von einem oder mehreren Futterbehältern (3) und von einem oder mehreren, mit dem oder den Futterbehältern (3) zusammenwirkenden, Futter-Förderbändern (2) umfassen.

Im Allgemeinen kann jeder Futterbehälter (3) ein oder mehrere, teilweise oder vollständig reversibel öffenbare und verschließbare Auslässe (13) für das Futter (11) aufweisen.

Wie insbesondere aus den Figuren 2, 11 und 12 hervorgeht, kann der oder die Auslässe (13) des Futterbehälters (3) in teilweise oder vollständig geöffnetem Zustand einen Futtermittel-Strahl (22) - in dem Bereich der jeweiligen Futterübergabestelle (28) - auf ein an dem Auslass (13) vorbei-bewegbares Förderband (2) - zur dortigen schichtweisen Auftragung von Futter (11) - richten.

Beispielsweise die Figuren 3, 4, 5, 7, 8 und 10 zeigen, dass das freie Ende (12) des mit Futter (11) beladenen Förderbandes (2) anschließend - an der ersten Tierfütterungs-Stelle (26) vorbei - zumindest bis zu derjenigen letzten Tierfütterungs-Stelle (24) der gleichen Gruppe von Tieren ausrollend bewegbar sein kann, welche die größte Entfernung zu dem Futterbehälter (3) aufweist.

In der Regel kann das Förderband (2) in dieser ausgerollten Stellung - vor der ersten Tierfütterungs-Stelle (26) und vor der letzten Tierfütterungs-Stelle (24) - verbleiben, bis die einstellbare, effektive Fütterungs-Zeit verstrichen ist.

Gemäß den Figuren 12 und 13 kann das freie Ende (12) des Förderbandes (2) nach Ablauf der vorgebbaren Fütterungszeit wieder in Richtung des Futterbehälters (3) - an der ersten Tierfütterungs-Stelle (26) vorbei - zurückbewegbar sein.

Grundsätzlich können eine oder mehrere Kombinationen von dem Futterbehälter (3) und von der darunter oder knapp dahinter vorgesehenen Förderband-Rolle (6) innerhalb oder außerhalb eines Stalles (23) oder gar auf einer Weide vorgesehen sein.

In besonders bevorzugten Ausführungsformen der erfindungsgemäßen Vorrichtung (1) können der Futterbehälter (3) und eine darunter oder knapp dahinter vorgesehene Förderband-Rolle (6) also - jeweils in einfacher oder mehrfacher Ausführung - außerhalb eines Stalles (23) vorgesehen sein.

In diesem Falle kann das außerhalb des Stalles (23) an einer Futterübergabestelle (28) aus dem Futterbehälter (3) mit Futter (11) beladene Förderband (2) - zu dem Zwecke der Tierfütterung und an dem freien Ende (12) des Förder-Bandes (2) ansetzend - beispielsweise in den Innenraum des Stalles (23) - in der Art einer heraus-streckbaren Zunge - bewegbar sein.

Nach Ablauf der für die Tierfütterung eingebbaren Zeit kann das Förder-Band (2) - nur noch mit Rest-Futter (15) beladen und in der Art einer eingezogenen Zunge wieder an seinen außerhalb des Stalles (23) gelegenen Ursprungs-Ort zurückbewegbar sein.

Wie aus den Figuren 1, 3, 5, 7, 8 und 10 hervorgeht, kann das Futter-Förderband (2) beispielsweise mittels einer stallseitigen Seilwinde (7) - bei gleichzeitiger rotativer Freigabe der außerhalb des Stalles (23) befindlichen Förderband-Rolle (6), auf welcher das Förderband (2) aufgewickelt ist - in das Innere eines Stalles (23) in Futter beladenem Zustand hinein-ziehbar sein.

Vorzugsweise kann das Futter-Förderband (2) nach dem Verstreichen der vorgebbaren Fress-Zeit mittels einer außerhalb des Stalles (23) vorgesehenen, rotativ antreibbaren Förderband-Rolle (6) in Rest-Futter (15) beladenem Zustand - bei gleichzeitiger rotativer Freigabe der auf das Zugseil (10) wirkenden Seilwinde (7) - aus dem Inneren des Stalles (23) wieder nach außen heraus-ziehbar sein.

In besonders bevorzugten Ausführungsformen der erfindungsgemäßen Vorrichtung (1) kann diese eine oder mehrere, jeweils ein- oder mehrteilige Einrichtungen (17) zur automatischen Steuerung der Vorrichtung (1) umfassen.

In der Regel können diese eine oder die mehreren Einrichtungen (17) zur automatischen Steuerung der Vorrichtung (1) mit der Einrichtung zum vollständigen oder teilweise Öffnen und Verschließen des Auslasses (13) des Futterbehälters (3) und/oder mit dem rotativen Antrieb (9) der Förderband-Seilwinde (7) und/oder mit dem rotativen Antrieb (8) der Förderband-Rolle (6) und/oder mit einer Einrichtung zum seitlichen Schwenken oder Heben und Senken des Restfutter-Abstreifers (14) drahtlos oder drahtgebunden in Verbindung stehen oder in Verbindung bringbar sein.

Die eine oder die mehreren Einrichtungen (17) zur automatischen Steuerung der Vorrichtung (1) können jeweils derart ausgestaltet sein, dass sie tagsüber und nachts - jeweils zu vorgebbaren Zeiten - ein, zwei, drei, vier oder mehrere Fütterungs-Zyklen der Vorrichtung (1) koordinieren.

In besonders bevorzugten Ausführungsformen der erfindungsgemäßen Vorrichtung (1) können diese Fütterungs-Zyklen jeweils in Abhängigkeit von über eine drahtlos oder drahtgebunden mit der Einrichtung (17) zur automatischen Steuerung in Verbindung stehende Eingabeeinrichtung, zum Beispiel über eine Fernbedienung, eingebbare Fütterungs-Zeiten, Fütterungs-Dauern und den dazu jeweils gehörenden Mengen an Futter (11) von der Vorrichtung (1) ausführbar sein.

In der Regel können die eine oder die mehreren Einrichtungen (17) zur automatischen Steuerung der Vorrichtung (1) derart ausgestaltet sein, dass sie - jeweils zu vorbestimmbaren Fütterungszeiten und pro Futterzyklus - zunächst den rotativen Antrieb (9) der Förderband-Seilwinde (7) einschalten und gleichzeitig den rotativen Antrieb (8) der gegebenenfalls außerhalb des Stalles (23) befindlichen Förderband-Rolle (6) - zur Ermöglichung der Abwickelbarkeit des Förderbandes (2) von der Förderband-Rolle (6) rotativ freischalten.

Hierdurch kann ein Hineinziehen des Förderbandes (2) - in seiner Funktion als Futtertisch - in das Innere des Stalles (23) bis zu der letzten Tierfütterungs-Stelle (24) bewirkt werden.

Anschließend können die eine oder die mehreren Einrichtungen (17) zur automatischen Steuerung der Vorrichtung (1) - unmittelbar nach dem Einschalten der Förderband-Seilwinde (7) - eine vollständige oder teilweise Öffnung des - gegebenenfalls auf den außerhalb des Stalles (23) befindlichen Startbereich (12) des Förderbandes (2) oder auf die Futterübergabestelle (28) ausgerichteten - Auslasses (13) des Futterbehälters (3) bewirken.

Über die vorgebbare Rotationsgeschwindigkeit des rotativen Antriebes (9) der Förderband-Seilwinde (7) kann gegebenenfalls die Höhe - und damit die Menge - des auf das an dem Auslass (13) vorbeiziehende Förderband (2) fallenden Futters (11) einstellbar sein.

In der Regel können die eine oder die mehreren Einrichtungen (17) zur automatischen Steuerung der Vorrichtung (1) den rotativen Antrieb (9) der Futterband-Seilwinde (7) ausschalten, wenn das Förderband (2) mit einer vorbestimmten Länge bis zur letzten Tierfütterungs-Stelle (24) in das Innere des Stalles (23) hineingezogen ist.

Des weiteren können die eine oder die mehreren Einrichtungen (17) zur automatischen Steuerung der Vorrichtung (1), nach Ablauf der einstellbaren Zeit, in welcher die Tiere das auf dem Futterband (2) aufliegende Futter (11) aufnehmen sollen, beispielsweise den rotativen Antrieb (9) der Futterband-Seilwinde (7) - für die Abwickelbarkeit des Seiles (10) von der Futterband-Seilwinde (7) - rotativ freischalten.

Anschließend können die eine oder die mehreren Einrichtungen (17) zur automatischen Steuerung der Vorrichtung (1) beispielsweise den rotativen Antrieb (8) der gegebenenfalls außerhalb des Stalles (23) befindlichen Förderband-Rolle (6) - zum Herausziehen des als Futtertisch gedient habenden und nur mehr mit Rest-Futter (15) beladenen Förderbandes (2) aus dem Stall (23) - einschalten.

In der Regel können die eine oder die mehreren Einrichtungen (17) zur automatischen Steuerung der Vorrichtung (1) beispielsweise den rotativen Antrieb (8) der Förderband-Rolle (6) erst dann ausschalten, wenn das Förderband (2) auf der gegebenenfalls außerhalb des Stalles (23) befindlichen Förderband-Rolle (6) wieder aufgewickelt ist.

In besonders bevorzugten Ausführungsformen der erfindungsgemäßen Vorrichtung (1) kann es sich bei der oder den Einrichtungen zur Eingabe von Steuerungsvorgaben - in Form der Zeitpunkte der Auslösungen von Fütterungs-Zyklen und der pro Fütterungs-Zyklus auszugebenden Menge an Futter (11) - an die eine oder an die mehreren Steuereinrichtungen (17) jeweils um eine Tastatur, ein Touch-Pad, einen Touch-Screen oder um ein mit der Steuereinrichtung (17) drahtlos oder drahtgebunden in Verbindung stehendes mobiles Telefon (Handy) - gegebenenfalls mit einem die Einstellung der variablen Stellgrößen der erfindungsgemäßen Vorrichtung (1) gestattenden App-Programm - handeln.

Bei bevorzugten Ausführungsformen der erfindungsgemäßen Vorrichtung (1) zum automatischen Füttern von Gruppen von Tieren kann der Futterbehälter (3) eine elektromotorisch und/oder über die Welle eines Traktors (27) oder über einen beide Antriebsarten kombinierenden Hybrid-Antrieb betreibbare Futter-Mischeinrichtung umfassen und verfahrbar oder ortsfest feststehend und stationär ausgebildet sowie als Mischbehälter oder Futtermischwagen ausgebildet sein.

Der Futterbehälter (3) kann beispielsweise mittels Frontlader, Radlader oder auch durch eine Beladeeinrichtung mit Förderband mit dem Futter (11) beladen werden, wobei es sich bei dem Futter (11) um verschiedene Futtersorten handeln kann, beispielsweise um Mais, Gras, Stroh oder Silage und dergleichen.

Insbesondere den Figuren 12 und 13 ist zu entnehmen, dass die erfindungsgemäße Vorrichtung (1) gegebenenfalls ein oder mehrere leistenförmige oder besenförmige Abstreifelemente (14) zum Abstreifen von Restfutter (15) von dem in Richtung des Futter-Behälters (3) zurückfahrenden Futter-Förderband (2) umfassen kann.

Im Allgemeinen kann dieses oder können diese Abstreifelemente (14) - vor oder gleichzeitig zu dem Einschalten des innerhalb oder außerhalb des Stalles (33) befindlichen rotativen Antriebes (8) der Förderband-Rolle (6) - in zu der Längsachse des Förderbandes (2) schräger Ausrichtung über das Förderband (2) hydraulisch, pneumatisch, elektromotorisch oder manuell von einer Seite her oder von beiden Seiten her schwenkbar oder auf das Förderband (2) absenkbar sein.

In diesem Falle kann das nach der Tierfütterung auf dem Förderband (2) verbliebene Restfutter (15) - während des Herausfahrens des Förderbandes (2) aus dem Stall (23) oder während des Zurückfahrens innerhalb des Stalles (23) - von dem schrägstehenden Abstreifelement (14) zur Seite hin über eine Abwurfstelle (19) in eine Auffangstation (16) für Restfutter (15) geleitet werden.

In einer bevorzugten Ausführungsform der erfindungsgemäßen Vorrichtung (1) kann das von dem zurückfahrenden Förderband (2) mit dem Abstreifelement (14) abgenommene Restfutter (15) gegebenenfalls aus der Restfutter-Auffangstation (16) automatisch über ein separates Förderband oder über eine Förderschnecke dem Futterbehälter (3) wieder zuführbar sein.

Alternativ hier kann das von dem zurückfahrenden Förderband (2) mit dem Abstreifelement (14) abgenommene Restfutter (15) gegebenenfalls aus der Restfutter-Auffangstation (16) einem Fermenter, einer Biogasanlage oder einer Sammelstelle für tierische Stoffwechselprodukte (Misthaufen) zugeführt werden.

Insbesondere die Figuren 1, 2, 3, 4, 5, 7, 8 und 10 zeigen, dass knapp hinter der Futterübergabestelle (28) und zumindest zwischen der Position der ersten Tierfütterungs-Stelle (26) und der Position der letzten Tierfütterungs-Stelle (24), ein Träger (25) zur Abstützung und Führung des Förderbandes (2) vorgesehen sein kann.

In der Regel kann dieser Träger (25) in der Form eines sich entlang der Längsachse des Förderbandes (2) erstreckenden, rinnenförmigen Futtertroges (5) ausgebildet sein.

Insbesondere Figur 8 zeigt, dass die Vorrichtung (1) - beispielsweise in einem Stall (23) - in Form einer oder mehrerer Kombinationen von jeweils zwei Förder-Bändern (2) ausgebildet sein kann, die ausgehend von einer zentralen, gemeinsamen Futterübergabestelle (28) in entgegengesetzte oder unterschiedliche Richtungen bewegbar sind.

Aus Figur 7 geht hervor, dass die Vorrichtung (1) - beispielsweise in einem Stall (23) - ein, zwei oder mehrere Förder-Bänder (2) umfassen kann, die sich jeweils randseitig entlang und parallel zu den Längsseiten eines Stalles (23) jeweils durchgängig erstrecken, wobei jedes Förderband (2) über eine eigene, individuelle Futterübergabestelle (28) verfügen kann.

Der Zugriff von Tieren auf das auf dem Förder-Band (2) aufliegende Futter (11) kann - bei einem randwärts angeordneten Förder-Band (2) - von einer Seite oder von beiden Seiten her erfolgen, wobei das Förder-Band (2) bei beidseitigem Zugriff mittig angeordnet ist.

In bevorzugten Ausführungsformen der erfindungsgemäßen Vorrichtung (1) können in dem Bereich der Futterübergabestelle (28) und/oder in dem Bereich zwischen der ersten Tierfütterungs-Stelle (26) und der letzten Tierfütterungs-Stelle (24) ein oder mehrere Einrichtungen zur Messung der Schichtdicke des auf dem Förder-Band (2) aufliegenden Futters (11) vorgesehen sein.

Diese Einrichtungen zur Messung der Schichtdicke des auf dem Förder-Band (2) aufliegenden Futters (11) können beispielsweise in der Form einer Waage, eines Tasters, eines Schwimmers, einer Lichtschranken-Einrichtung oder einer Laser-Abtast-Einrichtung ausgebildet sein.

Zusammenfassend ist festzustellen, dass im Rahmen der vorliegenden Erfindung ein automatisches Fütterungssystem für Gruppen von Tieren gleicher Leistungsstufe bereitgestellt wird, welches besonders wirtschaftlich ist, eine besonders robuste und flexible Lösung darstellt und eine in besonderem Maße ausgeprägte tiergerechte Fütterung erlaubt.

Der robuste Charakter der erfindungsgemäßen Vorrichtung (1) ergibt sich insbesondere aus der Tatsache, dass ihre Konstruktion in besonderem Maße Langlebigkeit und einen minimalen Wartungsaufwand sicherstellt.
Die Robustheit der erfindungsgemäßen Vorrichtung (1) folgt ferner aus ihrer einfachen Bedienbarkeit, da alle notwendigen Parameter - beispielsweise Futterzyklen-Zeiten, Geschwindigkeiten des Förder-Bandes (2) und damit Mengen des Futters (11) auf dem Förder-Band (2) - über eine Steuerungseinrichtung (17), welche gegebenenfalls drahtgebunden oder drahtlos mit einer Eingabeeinrichtung in Verbindung steht, einfach und schnell einstellbar, eingebbar und nötigenfalls änderbar sind.

Zum einen erlaubt die erfindungsgemäße Vorrichtung (1) ferner die Ersparnis von Zeit, da sie das Futter (11) automatisch nach Belieben und je nach Bedarf so oft wie gewünscht - auch nachts und an Sonn- und Feiertagen - den Tieren mittels der erfindungsgemäßen Kombination aus Futterbehälter (3) und Förder-Band (2) vorlegt. Dadurch werden Freiräume für andere Aufgaben geschaffen. Auch die zeitintensive Futtervorlage mittels Mischwagen oder Silokamm entfällt bei dem Einsatz der erfindungsgemäßen Vorrichtung (1) somit.

Zum Anderen gestattet die erfindungsgemäße Vorrichtung (1) darüber hinaus die Reduzierung körperlicher Arbeit und von vergleichbarem Aufwand, denn das arbeitsintensive manuelle Anschieben des Futters in Richtung der zu fütternden Tiere und das manuelle Wegkehren von Rest-Futter von einem Futter-Tisch entfällt. Denn die Tiere gelangen über die gesamte Breite des Förder-Bandes (2) ohne manuelles Zutun problemlos an ihr Futter, insbesondere wenn der Träger (25) des Förder-Bandes (2) in Form eines rinnenförmigen Futtertroges (5) ausgebildet ist.

Das Futter-Band (2) räumt das verbleibende Rest-Futter (15) automatisch weg, wodurch ein stets sauberer und hygienischer Futtertisch in Form des Förder-Bandes (2) garantiert ist. Ein zeit- und arbeitsintensives manuelles Reinigen des Futtertisches ist nunmehr erstmalig nicht mehr erforderlich.

Die im Falle der vorliegenden erfindungsgemäßen Vorrichtung (1) bestehende, in besonderem Maße ausgeprägte Wirtschaftlichkeit ist insbesondere unter dem Aspekt einer Optimierung von Kosten gegeben:
So sind die Anschaffungskosten für die erfindungsgemäße Vorrichtung (1) im Vergleich zu anderen automatischen Fütterungssystemen besonders gering. Aufgrund des geringen Verschleißes und des niedrigen Wartungsaufwandes sind auch deren Folgekosten besonders klein.

So ist zunächst eine Reduzierung des Platzbedarfes durch den Wegfall der bisher zwingend erforderlichen Traktorschneisen erreichbar. Der platzsparende Charakter der erfindungsgemäßen Vorrichtung(1) wird daneben auch dadurch unterstrichen, dass sie sich an die individuelle bauliche Situation des vorhandenen Stalles (23) in hervorragender Art und Weise anpassen lässt. Beispielsweise sind die Längen und Breiten des oder der Förder-Bänder (2) frei wählbar.

Wie insbesondere aus den Figuren 7 und 8 hervorgeht, sind einreihige Ausführungen mit einem Förder-Band (2) und doppelreihige Ausführungen mit zwei in entgegengesetzten Richtungen bewegbaren Förder-Bändern (2) realisierbar, wobei in dem Falle des Vorhandenseins von zwei einreihig zueinander angeordneten, in entgegengesetzten Richtungen bewegbaren Förder-Bändern (2) zwischen den beiden Förder-Bändern (2) eine zentrale Futterübergabestelle (28) (siehe insbesondere Figur 8) vorgesehen sein kann.

Alternativ hierzu kann in dem Falle des Vorhandenseins von zwei zweireihig zueinander angeordneten, sich jeweils durch den Stall (23) durchgängig erstreckenden Förder-Bändern (2) jeweils pro Förder-Band (2) eine individuelle Futterübergabestelle (28) (siehe insbesondere Figur 7) vorgesehen sein.

Bei dem Neubau eines Stalles ergibt sich der wirtschaftliche Vorteil der erfindungsgemäßen Vorrichtung (1) insbesondere aus der Tatsache, dass dort Kosten eingespart werden durch einen besonders kompakten Neu-Stallbau und die Verwendung schmaler Förder-Bänder (2).

Bei dem Umbau eines Stalles ergibt sich der wirtschaftliche Vorteil der erfindungsgemäßen Vorrichtung (1) bereits aus der Gewinnung von zusätzlicher Tier-Stellfläche: Da breite Traktorschneisen entfallen, kann bei gleichem Platzangebot die Herde aufgestockt werden. Durch den Einsatz eines schmalen Förder-Bandes (2) kann darüber hinaus der Bewegungsbereich der Tiere vergrößert werden. Das Platzangebot eines bereits vorhandenen Stalles kann also besonders effizient genutzt werden.

Außerdem ist die erfindungsgemäße Vorrichtung (1) zum automatischen Füttern von Gruppen von Tieren in hohem Maße flexibel:
Denn die erfindungsgemäße Vorrichtung (1) führt den zu fütternden Tieren das Futter automatisch zu - beliebig oft, am Tag und in der Nacht.

Ferner animiert die erfindungsgemäß häufige und zeitlich flexible Futtervorlage die Tiere zum Fressen, wodurch es zu einer höheren Milchleistung kommt.
Die Flexibilität der erfindungsgemäßen Vorrichtung (1) folgt auch daraus, dass sie für die Fütterung von Schafen und Ziegen sowie in der Rindermast verwendbar ist. Schließlich ergibt sich die Flexibilität der erfindungsgemäßen Vorrichtung (1) aus deren Fähigkeit zur Überwindung selbst ausgeprägter baulicher Höhenunterschiede und großer Entfernungen zwischen dem Futterbehälter (3) einerseits und der letzten Tierfütterungs-Stelle (24) andererseits (siehe insbesondere Figur 9).

Ein weiterer Vorteil der erfindungsgemäßen Vorrichtung (1) besteht darin, dass sie sich an nahezu jede Stallsituation anpassen lässt.

Schließlich ist die erfindungsgemäße Vorrichtung (1) auch deswegen vorteilhaft, weil sie über einen modularen Aufbau verfügt:
In einer Grundausstattung umfasst die erfindungsgemäße Vorrichtung (1) das Förder-Band (2) für Futter (11) mit der rotativ antreibbaren Förderband-Rolle (6) und der rotativ antreibbaren Förderband-Seilwinde (7).

Als zusätzliche Module können eine Steuerungseinrichtung (17) und ein Futterbehälter (3) - vorzugsweise mit integrierter elektromotorisch und/oder über die Kardanwelle eines Traktors (27) antreibbarer Futter-Mischeinrichtung - mit der Grundausstattung "Förder-Band (2)" kombiniert werden.

Die in besonderem Maße ausgeprägte tiergerechte Art der Fütterung ergibt sich in dem Falle der erfindungsgemäßen Vorrichtung (1) insbesondere aus der Tatsache, dass die Tiere mehrmals am Tag und in der Nacht mit Futter in überaus flexibler Art und Weise automatisch versorgt werden. Die tiergerechte Fütterung erfolgt ferner aufgrund der optimalen Erreichbarkeit des Futters durch die zu fütternden Tiere; denn insbesondere im Falle einer rinnenförmigen Ausführung des Trägers (25) für das Förder-Band (2) bleiben die Rationen an Futter (11) stets auf dem Förder-Band (2).

Die erfindungsgemäße Vorrichtung (1) stellt ferner die ideale Kombination mit einem Melkroboter dar, denn dieser wird dann auch nachts von den Tieren zu Melkzwecken aufgesucht, wodurch die Milchleistung gesteigert wird. Schließlich sind flexible Futterzeiten die optimale Verbindung zu flexiblen Melkzeiten.

Der die Tiergesundheit fördernde Charakter der erfindungsgemäßen Vorrichtung (1) ergibt sich insbesondere auch daraus, dass sie eine - für Tiere derselben Leistungsstufe, beispielsweise für Mutterkühe oder für Trockensteher oder für Leistungsgruppen - abgestimmte, leistungsgerechte und individuelle Fütterung und damit eine bisher nicht gekannte Vielfalt von Fütterungsvorgängen gestattet. Auch mehrere nebeneinander stehende Tiere, welche jeweils der gleichen Leistungsgruppe angehören, können mit der erfindungsgemäßen Vorrichtung (1) automatisch gefüttert werden. Da das Förder-Band (2) im wesentlichen kontinuierlich Futter (11) in Form von Mischrationen oder Grünfutter den Tieren zuführt, beobachtet man eine besonders ausgeprägte Ruhe im Stall, welche die Tiergesundheit fördert und auch rangniederen Tieren ein stressfreies Fressen ermöglicht.

Der Aspekt einer "tiergerechten Fütterung" wird im Falle der erfindungsgemäßen Vorrichtung (1) auch dadurch unterstrichen, dass sie ein gesundes Stallklima ermöglicht. Denn insbesondere aufgrund des Einsatzes des bewegbaren Förder-Bandes (2) werden die Tiere von dem Lärm, von dem Staub und von den Abgasen verschont, welche ansonsten die Einfahrt mit einem Traktor bewirkt.

Eine Verbesserung der Tiergesundheit beobachtet man im Falle der erfindungsgemäßen Vorrichtung (1) auch deswegen, weil das häufige, in engen zeitlichen Intervallen mögliche Fressen - insbesondere auch während der Nacht - für einen nur dann realisierbaren optimalen pH-Wert im Pansen sorgt.

Ein weiterer Vorteil der erfindungsgemäßen Vorrichtung (1) besteht darin, dass sie selbst bei ausgeprägten Höhenunterschieden und großer Entfernung zu dem Futterbehälter (3) erstmals ein sicheres und bequemes automatisches Füttern von Gruppen von Tieren gestattet:
Denn auf dem Förder-Band (2) liegt das Futter (11) in der Regel in recht dünner Schicht auf, so dass ein höhenunterschiedbedingtes oder förderbandlängenbedingtes Verrutschen oder Abrutschen des Futters (11) entlang der Längsachse des Förder-Bandes (2) sicher unterbleibt.
Somit kann im Falle der erfindungsgemäßen Vorrichtung (1) sogar eine automatische Fütterung selbst bei solchen Höhenunterschieden oder Entfernungen zu dem Futterbehälter (3) erfolgen, bei welchen bekannte andere Systeme scheitern.

Bei dem Förder-Band (2) kann es sich beispielsweise um ein glasfaserverstärktes PVC-Band handeln. Die Reißfestigkeit des Förder-Bandes (2) kann beispielsweise in dem Bereich von 1,0 t bis 3,0 t liegen. Vorzugsweise ist das Förder-Band (2) lebensmittelecht und resistent gegen Futter-Säuren. Die Bandstärke des Förder-Bandes (2) kann beispielsweise in dem Bereich von 1,0 mm bis 4,5 mm liegen; die Länge des Förder-Bandes (2) kann beispielsweise in dem Bereich von 2,0 m bis 200,00 m liegen; die Bandbreite des Förder-Bandes (2) kann beispielsweise in dem Bereich von 20,0 cm bis 200,0 cm liegen.

Die Einzugsgeschwindigkeiten der Seilwinde (7) und/oder der Förderband-Rolle (6) können beispielsweise in dem Bereich von 2,0 m/min bis 20,0 m/min liegen und konstant sein oder stufenlos einstellbar sein.

Bei der oder den Einrichtungen zur Eingabe von Steuerungsvorgaben an die eine oder an die mehreren Steuereinrichtungen (17) kann es sich jeweils beispielsweise um eine Tastatur, ein Touch-Pad, einen Touch-Screen oder um ein mit der Steuereinrichtung (17) drahtlos oder drahtgebunden in Verbindung stehendes mobiles Telefon (Handy) - gegebenenfalls mit einem die Einstellung der variablen Stellgrößen der erfindungsgemäßen Vorrichtung (1) gestattenden App-Programm - handeln.

Die erfindungsgemäße Vorrichtung (1) kann ferner auf Knopfdruck oder per Funkfernbedienung steuerbar sein.

Das Seil (10) zwischen dem freien Ende (12) des Förder-Bandes (2) und der Seilwinde (7) kann beispielsweise ein Edelstahl-Seil sein.

Ein besonderer Vorteil der erfindungsgemäßen Vorrichtung (1) besteht darin, dass sie über eine automatische Endabschaltung verfügt und im Vergleich zu anderen Systemen eine erhebliche Stromersparnis ermöglicht.

Auch das Vorsehen einer automatischen Rückholvorrichtung stellt einen besonderen Vorteil der erfindungsgemäßen Vorrichtung (1) dar.

Die erfindungsgemäßen Vorrichtung (1) erlaubt ferner- schon aufgrund der ressourcenschonenden und materialeinsparenden Bauweise und der Vermeidung von üppigem Traktor-Treibstoff-Verbrauch - erstmalig eine ausgesprochen umweltschonende automatische Fütterung.

Zumal die erfindungsgemäße Vorrichtung (1) die gezielte Fütterung von zu der gleichen Leistungsgruppe gehörenden Tieren gestattet, ermöglicht sie darüber hinaus eine besonders bedarfsgerechte und leistungsbezogene Fütterung.

## Patentansprüche

1. Vorrichtung (1) zum automatischen Füttern von Gruppen von Tieren, die eine oder mehrere Kombinationen von einem oder mehreren Futterbehältern (3) und von einem oder mehreren, mit dem oder den Futterbehältern (3) zusammenwirkenden, Futter-Förderbändern (2) umfasst, wobei jeder Futterbehälter (3) ein oder mehrere, reversibel teilweise oder vollständig öffenbare und verschließbare Auslässe (13) für das Futter (11) aufweist, wobei der oder die Auslässe (13) des Futterbehälters (3) in geöffnetem Zustand einen Futtermittel-Strahl (22) - in dem Bereich der jeweiligen Futterübergabestelle (28) - auf ein an dem Auslass (13) vorbei-bewegbares Förderband (2) - zur dortigen schichtweisen Auftragung von Futter (11) - richten, wobei das freie Ende (12) des mit Futter (11) beladenen Förderbandes (2) anschließend - an einer ersten Tierfütterungs-Stelle (26) vorbei - zumindest bis zu einer letzten Tierfütterungs-Stelle (24) der gleichen Gruppe von Tieren ausrollend bewegbar ist, welche die größte Entfernung zu dem Futterbehälter (3) aufweist, wobei das Förderband (2) in dieser ausgerollten Stellung - vor der ersten Tierfütterungs-Stelle (26) und vor der letzten Tierfütterungs-Stelle (24) - verbleibt, bis die einstellbare Fütterungs-Zeit verstrichen ist und wobei das freie Ende (12) des Förderbandes (2) nach Ablauf der vorgebbaren Fütterungszeit wieder in Richtung des Futterbehälters (3) - an der ersten Tierfütterungs-Stelle (26) vorbei - zurückbewegbar ist, **dadurch gekennzeichnet, dass** die Vorrichtung (1) zum automatischen Füttern von Gruppen von Tieren eine oder mehrere, jeweils ein- oder mehrteilige Einrichtungen (17) zur automatischen Steuerung der Vorrichtung (1) umfasst, wobei diese eine oder die mehreren Einrichtungen (17) zur automatischen Steuerung mit der Einrichtung zum Öffnen und Verschließen des Auslasses (13) des Futterbehälters (3) und/oder mit dem rotativen Antrieb (9) der Förderband-Seilwinde (7) und/oder mit dem rotativen Antrieb (8) der Förderband-Rolle (6) und/oder mit einer Einrichtung zum seitlichen Schwenken oder Heben und Senken eines Restfutter-Abstreifers (14) drahtlos oder drahtgebunden in Verbindung stehen oder in Verbindung bringbar sind und jeweils derart ausgestaltet sind, dass sie tagsüber und nachts jeweils ein, zwei, drei, vier oder mehrere Fütterungs-Zyklen der Vorrichtung (1) koordinieren, welche jeweils in Abhängigkeit von über eine drahtlos oder drahtgebunden mit der Einrichtung (17) zur automatischen Steuerung in Verbindung stehende Eingabeeinrichtung eingebbare Fütterungs-Zeiten, Fütterungs-Dauern und den dazu jeweils gehörenden Mengen an Futter (11) von der Vorrichtung (1) ausführbar sind.

2. Vorrichtung (1) zum automatischen Füttern von Gruppen von Tieren nach Anspruch 1, **dadurch gekennzeichnet, dass** der Futterbehälter (3) und eine darunter oder knapp dahinter vorgesehene Förderband-Rolle (6) - jeweils in einfacher oder mehrfacher Ausführung - außerhalb eines Stalles (23) vorgesehen sind, wobei das außerhalb des Stalles (23) an einer Futterübergabestelle (28) aus dem Futterbehälter (3) mit Futter (11) beladene Förderband (2) - zu dem Zwecke der Tierfütterung und an dem freien Ende (12) des Förder-Bandes (2) ansetzend - in den Innenraum des Stalles (23) bewegbar ist und nach der Tierfütterung - beladen mit Rest-Futter (15) - wieder an seinen außerhalb des Stalles (23) gelegenen Ursprungs-Ort zurückbewegbar ist.

3. Vorrichtung (1) zum automatischen Füttern von Gruppen von Tieren nach einem der Ansprüche 1 oder 2, **dadurch gekennzeichnet, dass** das Futter-Förderband (2) mittels einer stallseitigen Seilwinde (7) - bei gleichzeitiger rotativer Freigabe der außerhalb des Stalles (23) befindlichen Förderband-Rolle (6), auf welcher das Förderband (2) aufgewickelt ist - in das Innere eines Stalles (23) in Futter beladenem Zustand hinein-ziehbar ist und nach dem Verstreichen der vorgebbaren Fress-Zeit mittels einer außerhalb des Stalles (23) vorgesehenen, rotativ antreibbaren Förderband-Rolle (6) in Rest-Futter (15) beladenem Zustand - bei gleichzeitiger rotativer Freigabe der auf das Zugseil (10) wirkenden Seilwinde (7) - aus dem Inneren des Stalles (23) wieder nach außen heraus-ziehbar ist.

4. Vorrichtung (1) zum automatischen Füttern von Gruppen von Tieren nach Anspruch 1, **dadurch gekennzeichnet, dass** die eine oder die mehreren Kombinationen von dem Futterbehälter (3) und von der Förderband-Rolle (6) innerhalb des Stalles (23) vorgesehen sind.

5. Vorrichtung (1) zum automatischen Füttern von Gruppen von Tieren nach einem der vorhergehenden Ansprüche, **dadurch gekennzeichnet, dass** die eine oder die mehreren Einrichtungen (17) zur automatischen Steuerung der Vorrichtung (1) derart ausgestaltet sind, dass sie - jeweils zu vorbestimmbaren Zeiten und pro Futterzyklus - zunächst den rotativen Antrieb (9) der Förderband-Seilwinde (7) einschalten und gleichzeitig den rotativen Antrieb (8) der gegebenenfalls außerhalb des Stalles (23) befindlichen Förderband-Rolle (6) - zur Ermöglichung der Abwickelbarkeit des Förderbandes (2) von der Förderband-Rolle (6) rotativ freischalten, um ein Hineinziehen des Förderbandes (2) in seiner Funktion als Futtertisch in das Innere des Stalles (23) bis zu der letzten Tierfütterungs-Stelle (24) zu bewirken, unmittelbar nach dem Einschalten der Förderband-Seilwinde (7) eine Öffnung des - gegebenenfalls auf den außerhalb des Stalles (23) befindlichen Startbereich (12) des Förderbandes (2) ausgerichteten - Auslasses (13) des Futterbehälters (3) bewirken, wobei über die vorgebbare Rotationsgeschwindigkeit des rotativen Antriebes (9) der Förderband-Seilwinde (7) die Höhe - und damit die Menge - des auf das an dem Auslass (13) vorbeiziehende Förderband (2) fallenden Futters (11) einstellbar ist, den rotativen Antrieb (9) der Futterband-Seilwinde (7) ausschalten, wenn das Förderband (2) mit einer vorbestimmten Länge bis zur letzten Tierfütterungs-Stelle (24) in das Innere des Stalles (23) hineingezogen ist, nach Ablauf der einstellbaren Zeit, in welcher die Tiere das auf dem Futterband (2) aufliegende Futter (11) aufnehmen sollen, den rotativen Antrieb (9) der Futterband-Seilwinde (7) für die Abwickelbarkeit des Seiles (10) von der Futterband-Seilwinde (7) rotativ freischalten und den rotativen Antrieb (8) der gegebenenfalls außerhalb des Stalles (23) befindlichen Förderband-Rolle (6) - zum Herausziehen des als Futtertisch gedient habenden und nur mehr mit Rest-Futter (15) beladenen Förderbandes (2) aus dem Stall (23) - einschalten und den rotativen Antrieb (8) der Förderband-Rolle (6) erst dann ausschalten, wenn das Förderband (2) auf der gegebenenfalls außerhalb des Stalles (23) befindlichen Förderband-Rolle (6) wieder aufgewickelt ist, wobei es sich bei der oder den Einrichtungen zur Eingabe von Steuerungs-vorgaben - in Form der Zeitpunkte der Auslösungen von Fütterungs-Zyklen und der pro Fütterungs-Zyklus auszugebenden Menge an Futter (11) - an die eine oder an die mehreren Steuereinrichtungen (17) jeweils um eine Tastatur, ein Touch-Pad, einen Touch-Screen oder um ein mit der Steuereinrichtung (17) drahtlos oder drahtgebunden in Verbindung stehendes mobiles Telefon (Handy) - gegebenenfalls mit einem die Einstellung der variablen Stellgrößen der erfindungsgemäßen Vorrichtung (1) gestattenden App-Programm - handelt.

6. Vorrichtung (1) zum automatischen Füttern von Gruppen von Tieren nach einem der vorhergehenden Ansprüche, **dadurch gekennzeichnet, dass** der Futterbehälter (3) eine elektromotorisch und/oder über die Welle eines Traktors (27) oder über einen beide Antriebsarten kombinierenden Hybrid-Antrieb betreibbare Futter-Mischeinrichtung umfasst und verfahrbar oder ortsfest feststehend und stationär ausgebildet ist.

7. Vorrichtung (1) zum automatischen Füttern von Gruppen von Tieren nach einem der vorhergehenden Ansprüche, **dadurch gekennzeichnet, dass** sie ein oder mehrere leistenförmige oder besenförmige Abstreifelemente (14) zum Abstreifen von Restfutter (15) von dem in Richtung des Futter-Behälters (3) zurückfahrenden Futter-Förderband (2) umfasst, wobei dieses Abstreifelement (14) vor oder gleichzeitig zu dem Einschalten des innerhalb oder außerhalb des Stalles (33) befindlichen rotativen Antriebes (8) der Förderband-Rolle (6) in zu der Längsachse des Förderbandes (2) schräger Ausrichtung über das Förderband (2) hydraulisch, pneumatisch, elektromotorisch oder manuell schwenkbar oder auf das Förderband (2) absenkbar ist, so dass das nach der Tierfütterung auf dem Förderband (2) verbliebene Restfutter (15) - während des Herausfahrens des Förderbandes (2) aus dem Stall (23) oder während des Zurückfahrens innerhalb des Stalles (23) - von dem schrägstehenden Abstreifelement (14) zur Seite hin über eine Abwurfstelle (19) in eine Auffangstation (16) für Restfutter (15) geleitet wird und wobei das von dem zurückfahrenden Förderband (2) mit dem Abstreifelement (14) abgenommene Restfutter (15) gegebenenfalls aus der Restfutter-Auffangstation (16) automatisch über ein separates Förderband oder über eine Förderschnecke dem Futterbehälter (3) wieder zuführbar ist.

8. Vorrichtung (1) zum automatischen Füttern von Gruppen von Tieren nach einem der vorhergehenden Ansprüche, **dadurch gekennzeichnet, dass** knapp hinter der Futterübergabestelle (28) und zumindest zwischen der Position der ersten Tierfütterungs-Stelle (26) und der Position der letzten Tierfütterungs-Stelle (24), ein Träger (25) zur Abstützung und Führung des Förderbandes (2) vorgesehen ist, der in der Form eines sich entlang der Längsachse des Förderbandes (2) erstreckenden, rinnenförmigen Futtertroges (5) ausgebildet ist.

9. Vorrichtung (1) zum automatischen Füttern von Gruppen von Tieren nach einem der vorhergehenden Ansprüche, **dadurch gekennzeichnet, dass** sie in einem Stall (23) in Form einer oder mehrerer Kombinationen von jeweils zwei Förder-Bändern (2) ausgebildet ist, die ausgehend von einer zentralen, gemeinsamen Futterübergabestelle (28) in entgegengesetzte oder unterschiedliche Richtungen bewegbar sind.

10. Vorrichtung (1) zum automatischen Füttern von Gruppen von Tieren nach einem der vorhergehenden Ansprüche 1 bis 8, **dadurch gekennzeichnet, dass** sie in einem Stall (23) ein, zwei oder mehrere Förder-Bänder (2) umfasst, die sich jeweils randseitig entlang und parallel zu den Längsseiten eines Stalles (23) erstrecken, wobei jedes Förderband (2) über eine eigene, individuelle Futterübergabestelle (28) verfügt.

11. Vorrichtung (1) zum automatischen Füttern von Gruppen von Tieren nach einem der vorhergehenden Ansprüche, **dadurch gekennzeichnet, dass** in dem Bereich der Futterübergabestelle (28) und/oder in dem Bereich zwischen der ersten Tierfütterungs-Stelle (26) und der letzten Tierfütterungs-Stelle (24) ein oder mehrere Einrichtungen zur Messung der Schichtdicke des auf dem Förder-Band (2) aufliegenden Futters (11) vorgesehen sind, wobei diese in Form eines Tasters, eines Schwimmers, einer Lichtschranken-Einrichtung oder einer Laser-AbtastEinrichtung ausgebildet sind.

## Claims

1. A device (1) for automatically feeding groups of animals, which comprises one or more combinations of one or more feed containers (3) and one or more feed conveyor belts (2) cooperating with the feed container(s) (3), wherein each feed container (3) has one or more reversibly partially or completely openable and closable outlets (13) for the feed (11), wherein the outlet or outlets (13) of the feed container (3) in the open state direct a feed jet (22) - in the region of the respective feed transfer point (28) - onto a conveyor belt (2) movable past the outlet (13) - for placing feed (11) thereon in a layered manner, wherein the free end (12) of the conveyor belt (2) loaded with feed (11) is subsequently movable - past a first animal feeding point (26) - in a unrolling manner at least up to a last animal feeding point (24) of the same group of animals which has the greatest distance to the feed container (3), wherein the conveyor belt (2) remains in this unrolled position - in front of the first animal feeding point (26) and in front of the last animal feeding point (24) - until the adjustable feeding time has elapsed, and wherein after the presettable feeding time has elapsed, the free end (12) of the conveyor belt (2) can be moved back again in the direction of the feed container (3) - past the first animal feeding point (26) - **characterized in that** the device (1) for automatically feeding groups of animals comprises in each case one or more units (17) for automatically controlling the device (1), wherein the one or more units (17) for automatic control are connected or can be connected to the unit for opening and closing the outlet (13) of the feed container (3) and/or to the rotary drive (9) of the conveyor belt cable winch (7) and/or to the rotary drive (8) of the conveyor belt roller (6) and/or to a unit for lateral pivoting or raising and lowering of a residual feed stripper (14) in a wireless or wired manner and are each configured in such a manner that they coordinate during the day and at night in each case one, two, three, four or more feeding cycles of the device (1), each of which can be executed by the device (1) in dependence on feeding times, feeding durations and each of the quantities of feed (11) associated therewith, which can be input via an input device connected wirelessly or by wire to the unit (17) for automatic control.

2. The device (1) for automatically feeding groups of animals according to claim 1, **characterized in that** the feed container (3) and a conveyor belt roller (6) provided underneath or closely behind it - in each case in a single installation or multiple installation - are provided outside a stable (23), wherein the conveyor belt (2) loaded outside the stable (23) at a feed transfer point (28) with feed (11) from the feed container (3) - for the purpose of feeding the animals and engaging at the free end (12) of the conveyor belt (2) - is movable into the interior of the stable (23) and after feeding the animals - loaded with residual feed (15) - is movable back again to its original location outside the stable (23).

3. The device (1) for automatically feeding groups of animals according to any one of claims 1 or 2, **characterized in that** the feed conveyor belt (2) can be pulled into the interior of a stable (23) in a state loaded with feed by means of a cable winch (7) located at the stable - while simultaneously rotatively releasing the conveyor belt roller (6) which is located outside the stable (23) and on which the conveyor belt (2) is wound up - and after the predefinable feeding time has elapsed, can be pulled out again from the interior of the stable (23) to the outside in a state loaded with residual feed (15) by means of a rotatably drivable conveyor belt roller (6) provided outside the stable (23) - while simultaneously rotatively releasing the cable winch (7) acting on the traction cable (10).

4. The device (1) for automatically feeding groups of animals according to claim 1, **characterised in that** the one or more combinations of the feed container (3) and the conveyor belt roller (6) are provided within the stable (23).

5. The device (1) for automatic feeding of groups of animals according to any one of the preceding claims, **characterized in that** the one or more units (17) for automatically controlling the device (1) are configured in such a manner, that they - in each case at predeterminable times and per feeding cycle - firstly switch on the rotary drive (9) of the conveyor belt cable winch (7) and at the same time rotatively release the rotary drive (8) of the conveyor belt roller (6) optionally located outside the stable (23) - to enable the conveyor belt (2) to be unwound from the conveyor belt roller (6), in order to cause the conveyor belt (2), in its function as a feed table, to be pulled into the interior of the stable (23) up to the last animal feeding point (24), immediately after the conveyor belt cable winch (7) has been switched on, cause the outlet (13) of the feed container (3) - which optionally may be aligned with the starting region (12) of the conveyor belt (2) located outside the stable (23) - to be opened, wherein the height - and thus the quantity - of the feed (11) falling onto the conveyor belt (2) passing the outlet (13) is adjustable via the predeterminable rotational speed of the rotary drive (9) of the conveyor belt cable winch (7), switch off the rotary drive (9) of the conveyor belt cable winch (7) when the conveyor belt (2) with a predetermined length has been pulled into the interior of the stable (23) up to the last animal feeding point (24), after the expiry of the adjustable time in which the animals are to take up the feed (11) lying on the feed belt (2), rotatively release the rotary drive (9) of the feed belt winch (7) to be able to unwind the cable (10) from the feed belt winch (7) and switch on the rotary drive (8) of the conveyor belt roller (6) optionally located outside the stable (23) - for pulling the conveyor belt (2), which has served as a feed table and is now only loaded with residual feed (15), out of the stable (23) - and only switch off the rotary drive (8) of the conveyor belt roller (6) when the conveyor belt (2) is wound up again onto the conveyor belt roller (6) optionally located outside the stable (23), wherein the unit or units for inputting control specifications - in the form of the times at which feeding cycles are triggered and the amount of feed (11) to be dispensed per feeding cycle - to the one or more control units (17) are in each case a keyboard, a touchpad, a touch-screen, or a mobile phone (cell phone) connected to the control unit (17) in a wireless or wired manner - optionally having an app program allowing the setting of the variable control variables of the device (1) according to the invention.

6. The device (1) for automatically feeding groups of animals according to any one of the preceding claims, **characterized in that** the feed container (3) comprises a feed mixing unit which can be operated by electric motor and/or via the shaft of a tractor (27) or via a hybrid drive combining both types of drive and is designed to be movable or immovably fixed and stationary.

7. The device (1) for automatically feeding groups of animals according to any one of the preceding claims, **characterized in that** it comprises one or more strip-shaped or broom-shaped stripping elements (14) for stripping residual feed (15) from the feed conveyor belt (2) moving back in the direction of the feed container (3), wherein, before or simultaneously with switching on the rotary drive (8) of the conveyor belt roller (6) located inside or outside the stable (33), this stripping element (14) can be hydraulically, pneumatically, electromotively or manually pivoted over the conveyor belt (2) or lowered onto the conveyor belt (2) in an inclined orientation relative to the longitudinal axis of the conveyor belt (2), so that the residual feed (15) remaining on the conveyor belt (2) after the animal feeding - while the conveyor belt (2) moves out of the stable (23) or while it moves back inside the stable (23) - is guided by the inclined stripping element (14) towards the side via a discharge point (19) into a collecting station (16) for residual feed (15), and wherein the residual feed (15) removed by means of the stripping element (14) from the conveyor belt (2) that moves back can optionally be automatically fed back from the residual feed collecting station (16) to the feed container (3) via a separate conveyor belt or via a conveying screw.

8. The device (1) for automatically feeding groups of animals according to any one of the preceding claims, **characterized in that** just behind the feed transfer point (28) and at least between the position of the first animal feeding point (26) and the position of the last animal feeding point (24), a support (25) for supporting and guiding the conveyor belt (2) is provided, which support is in the form of a channel-shaped feed trough (5) extending along the longitudinal axis of the conveyor belt (2).

9. The device (1) for automatically feeding groups of animals according to any one of the preceding claims, **characterized in that** it is formed, in a stable (23), in the form of one or more combinations of in each case two conveyor belts (2) which, starting from a central, common feed transfer point (28), can be moved in opposite or different directions.

10. The device (1) for automatically feeding groups of animals according to any one of the preceding claims 1 to 8, **characterized in that** it comprises, in a stable (23), one, two or more conveyor belts (2) each of which extends at the edge along and parallel to the longitudinal sides of a stable (23), wherein each conveyor belt (2) has its own individual feed transfer point (28).

11. The device (1) for automatically feeding groups of animals according to any one of the preceding claims, **characterized in that** in the region of the feed transfer point (28) and/or in the region between the first animal feeding point (26) and the last animal feeding point (24), one or more units for measuring the layer thickness of the feed (11) lying on the conveyor belt (2) are provided, wherein these units are designed in the form of a probe, a float, a light barrier unit or a laser scanning unit.

## Revendications

1. Dispositif (1), destiné à l'alimentation automatique de groupes d'animaux qui comprend une ou plusieurs associations d'un ou de plusieurs réservoirs de fourrage (3) et d'une ou de plusieurs bandes de convoyage de fourrage (2) coopérant avec le ou les réservoirs de fourrage (3), chaque réservoir de fourrage (3) comportant une ou plusieurs sorties (13) pour le fourrage (11), apte(s) à s'ouvrir et à se fermer partiellement ou totalement de manière réversible, en position ouverte, la ou les sorties (13) du réservoir de fourrage (3) dirigeant un jet de fourrage (22) (dans la région du point respectif de distribution de fourrage (28)) sur une bande de convoyage (2) déplaçable à l'avant de la sortie (13) (pour y appliquer par couches du fourrage (11)), l'extrémité libre (12) de la bande de convoyage (2) chargée de fourrage (11) étant ensuite mobile en se déroulant (en passant devant un premier point (26) d'alimentation des animaux) au moins jusqu'à un dernier point (24) d'alimentation des animaux du même groupe d'animaux qui présente la plus grande distance par rapport au réservoir de fourrage (3), la bande de convoyage (2) restant dans cette position déroulée (à l'avant du premier point (26) d'alimentation des animaux et à l'avant du dernier point (24) d'alimentation des animaux), jusqu'à ce que le temps d'alimentation réglable soit écoulé et après écoulement du temps d'alimentation prédéfinissable, l'extrémité libre (12) de la bande de convoyage (2) étant mobile en retour dans la direction du réservoir de fourrage (3) (en passant devant le premier point (26) d'alimentation des animaux), **caractérisé en ce que** le dispositif (1) destiné à l'alimentation automatique de groupes d'animaux comprend un ou plusieurs système(s) (17) de commande automatique du dispositif (1), respectivement en un ou plusieurs éléments, ledit un ou les plusieurs système(s) (17) pour la commande automatique étant en liaison ou aptes à être amené(s) en liaison filaire ou sans fil avec le système d'ouverture ou de fermeture de la sortie (13) du réservoir de fourrage (3) et/ou avec l'entraînement rotatif (9) du treuil (7) de la bande de convoyage et/ou avec l'entraînement rotatif (8) du rouleau (6) de la bande de convoyage et/ou avec un système de pivotement latéral ou de soulèvement et d'abaissement d'un racleur de fourrage résiduel (14) et étant conçus respectivement de telle sorte que dans la journée et la nuit se coordonnent respectivement un, deux, trois, quatre ou plusieurs cycles d'alimentation du dispositif (1), lesquels sont réalisables par le dispositif (1) respectivement en fonction d'horaires d'alimentation, de durées d'alimentation et des quantités de fourrage (11) respectivement correspondantes, susceptibles d'être saisie par l'intermédiaire d'un système de saisie en liaison filaire ou sans fil avec le système (17) pour la commande automatique.

2. Dispositif (1), destiné à l'alimentation automatique de groupes d'animaux selon la revendication 1, **caractérisé en ce que** le réservoir de fourrage (3) et un rouleau de bande de convoyage (6) prévu en-dessous ou juste derrière celui-ci (respectivement en version simple ou multiple) sont prévus à l'extérieur d'une étable (23), la bande de convoyage (2) chargée de fourrage (11) à partir du réservoir de fourrage (3) à l'extérieur de l'étable (23) en un point de distribution (28) de fourrage (s'appliquant aux fins de l'alimentation des animaux et sur l'extrémité libre (12) de la bande de convoyage (2)) étant mobile à l'intérieur de l'étable (23) et après l'alimentation des animaux (chargée en fourrage résiduel (15)) étant à nouveau mobile en retour vers son point d'origine situé à l'extérieur de l'étable (23).

3. Dispositif (1), destiné à l'alimentation automatique de groupes d'animaux selon l'une quelconque des revendications 1 ou 2, **caractérisé en ce que** la bande de convoyage (2) de fourrage est apte à être tirée à l'état chargé de fourrage à l'intérieur d'une étable (23), au moyen d'un treuil (7) situé dans l'étable (en libérant simultanément en rotation le rouleau (6) de bande de convoyage se trouvant à l'extérieur de l'étable (23), sur lequel la bande de convoyage (2) est enroulée) et après un écoulement du temps de nourriture prédéfinissable, est de nouveau apte à être tirée vers l'extérieur, à partir de l'intérieur de l'étable (23), au moyen d'un rouleau (6) de bande de convoyage susceptible d'être entraîné en rotation, prévu à l'extérieur de l'étable (23), à l'état chargé en fourrage résiduel (15), (en libérant simultanément en rotation le treuil (7) agissant sur le câble de traction (10)).

4. Dispositif (1), destiné à l'alimentation automatique de groupes d'animaux selon la revendication 1, **caractérisé en ce que** l'une ou les plusieurs associations du réservoir à fourrage (3) et du rouleau (6) de bande de convoyage, sont prévues à l'intérieur de l'étable (23).

5. Dispositif (1), destiné à l'alimentation automatique de groupes d'animaux selon l'une quelconque des revendications précédentes, **caractérisé en ce que** l'un ou les plusieurs systèmes (17) pour la commande automatique du dispositif (1) sont conçus de sorte à mettre en route (respectivement à des horaires prédéfinissables et pour chaque cycle d'alimentation) d'abord l'entraînement en rotation (9) du treuil (7) de la bande de convoyage et (pour permettre l'aptitude au déroulage de la bande de convoyage (2), à libérer simultanément en rotation l'entraînement en rotation (8) du rouleau (6) de bande de convoyage (2) se trouvant le cas échéant à l'extérieur de l'étable (23), pour provoquer une traction vers l'intérieur de l'étable (23) jusqu'au dernier point d'alimentation des animaux (24) de la bande de convoyage (2) dans sa fonction de table d'alimentation, à provoquer directement après la mise en route du treuil (7) de la bande de convoyage une ouverture de la sortie (13) du réservoir de fourrage (3) (orientée le cas échéant vers la zone de démarrage (12) de la bande de convoyage (2) se trouvant à l'extérieur de l'étable (23)), par l'intermédiaire de la vitesse de rotation prédéfinissable de l'entraînement en rotation (9) du treuil (7) de la bande de convoyage, la hauteur (et ainsi la quantité) du fourrage (11) tombant sur la bande de convoyage (2) passant devant la sortie (13) étant réglable, à mettre à l'arrêt l'entraînement en rotation (9) du treuil (7) de la bande de fourrage lorsque la bande de convoyage (2) est tirée d'une longueur prédéfinie à l'intérieur de l'étable (23) jusqu'au dernier point d'alimentation des animaux (24), après écoulement du temps réglable pendant lequel les animaux sont censés absorber le fourrage (11) reposant sur la bande de fourrage (2), à libérer en rotation l'entraînement en rotation (9) du treuil (7) de la bande de fourrage, pour l'aptitude au déroulement du câble (10) à partir du treuil (7) de la bande de fourrage et à mettre en route l'entraînement en rotation (8) du rouleau (6) de la bande de convoyage se trouvant le cas échéant à l'extérieur de l'écurie (23) (pour tirer hors de l'étable (23) la bande de convoyage (2) ayant servi de table d'alimentation et uniquement chargée de fourrage résiduel (15)) et à ne mettre à l'arrêt l'entraînement en rotation (8) du rouleau (6) de la bande de convoyage que lorsque la bande de convoyage (2) est à nouveau enroulée sur le rouleau (6) de bande de convoyage se trouvant le cas échéant à l'extérieur de l'étable (23), le ou les systèmes de saisie de prescriptions de commande (sous la forme des moments de déclenchement de cycles d'alimentation et des quantités de fourrage (11) qui doivent être distribuées par cycle d'alimentation) à l'attention de l'un ou des plusieurs systèmes de commande (17) étant respectivement un clavier, un clavier tactile, un écran tactile ou un téléphone mobile (Handy) en liaison sans fil ou filaire avec le système de commande (17) (le cas échéant doté d'un programme d'application permettant le réglage des grandeurs de réglage variables du dispositif (1) selon l'invention.

6. Dispositif (1), destiné à l'alimentation automatique de groupes d'animaux selon l'une quelconque des revendications précédentes, **caractérisé en ce que** le réservoir de fourrage (3) comprend un dispositif mélangeur de fourrage apte à fonctionner par moteur électrique et/ou par l'intermédiaire de l'arbre d'un tracteur (27) ou par l'intermédiaire d'un entraînement hybride associant les deux types d'entraînements et est conçu en étant déplaçable ou à emplacement fixe ou stationnaire.

7. Dispositif (1), destiné à l'alimentation automatique de groupes d'animaux selon l'une quelconque des revendications précédentes, **caractérisé en ce qu'**il comprend un ou plusieurs éléments racleurs (14) en forme de baguette ou en forme de balai, pour racler du fourrage résiduel (15) de la bande de convoyage (2) de fourrage, se déplaçant en retour dans la direction du réservoir de fourrage (3), avant ou simultanément à la mise en route de l'entraînement en rotation (8) du rouleau (6) de la bande de convoyage se trouvant à l'intérieur ou à l'extérieur de l'étable (33), ledit élément de raclage (14) étant apte à pivoter par moyen hydraulique, pneumatique, par moteur électrique ou manuellement dans l'orientation oblique par rapport à l'axe longitudinal de la bande de convoyage (2) ou étant apte à s'abaisser sur la bande de convoyage (2), de sorte qu'après l'alimentation des animaux, du fourrage résiduel (15) restant sur la bande de convoyage (2) soit dirigé vers le côté (pendant la sortie de la bande de convoyage (2) hors de l'étable (23) ou pendant le déplacement en retour à l'intérieur de l'étable (23)) par l'élément racleur (14) debout en oblique, par l'intermédiaire d'un point de déversement (19) dans un poste de récupération (16) de fourrage résiduel (15) et le fourrage résiduel (15) repris par l'élément de raclage (14) sur la bande de convoyage (2) se déplaçant en retour étant apte le cas échéant à être réalimenté automatiquement à partir du poste de récupération (16) de fourrage résiduel vers le réservoir de fourrage (3) par l'intermédiaire d'une bande de convoyage séparée ou par l'intermédiaire d'une vis transporteuse.

8. Dispositif (1), destiné à l'alimentation automatique de groupes d'animaux selon l'une quelconque des revendications précédentes, **caractérisé en ce que** juste derrière le point de distribution de fourrage (28) et au moins entre la position du premier point d'alimentation des animaux (26) et la position du dernier point d'alimentation des animaux (24) est prévu un support (25), destiné à soutenir et à guider la bande de convoyage (2), qui est conçu sous la forme d'une mangeoire (5) en forme de goulotte s'étendant le long de l'axe longitudinal de la bande de convoyage (2) .

9. Dispositif (1), destiné à l'alimentation automatique de groupes d'animaux selon l'une quelconque des revendications précédentes, **caractérisé en ce qu'**il est conçu dans une étable (23) sous la forme d'une ou de plusieurs associations de respectivement deux bandes de convoyage (2), qui en partant d'un point de distribution de fourrage (28) commun centralisé sont mobiles dans la direction opposée ou dans différentes directions.

10. Dispositif (1), destiné à l'alimentation automatique de groupes d'animaux selon l'une quelconque des revendications précédentes 1 à 8, **caractérisé en ce que** dans une étable (23), il comprend une, deux ou plusieurs bandes de convoyage (2) qui s'étendent respectivement du côté du bord le long et à la parallèle des côtés longitudinaux d'une étable (23), chaque bande de convoyage (2) disposant d'un propre point de distribution de fourrage (28) individuel.

11. Dispositif (1), destiné à l'alimentation automatique de groupes d'animaux selon l'une quelconque des revendications précédentes, **caractérisé en ce que** dans la zone du point de distribution de fourrage (28) et/ou dans la zone entre le premier point d'alimentation des animaux (26) et le dernier point d'alimentation des animaux (24) sont prévus un ou plusieurs systèmes de mesure de l'épaisseur de couche du fourrage (11) reposant sur la bande de convoyage (2), ceux-ci étant conçus sous la forme d'un palpeur, d'un flotteur, d'un système de barrière photoélectrique ou d'un système de balayage par laser.
